Europäisches Patentamt

European Patent Office

Office européen des brevets

(11) Veröffentlichungsnummer: **0 305 810**
**A1**

## (12) EUROPÄISCHE PATENTANMELDUNG

(21) Anmeldenummer: **88113352.4**

(22) Anmeldetag: **17.08.88**

(51) Int. Cl.⁴: **C03B 23/207 , C03B 23/06 , H01J 61/30 , H01J 9/24**

(30) Priorität: **04.09.87 DE 3729710**

(43) Veröffentlichungstag der Anmeldung:
**08.03.89 Patentblatt ·89/10**

(84) Benannte Vertragsstaaten:
**DE ES FR GB IT SE**

(71) Anmelder: **Patent-Treuhand-Gesellschaft für elektrische Glühlampen mbH**
**Postfach 22 16 34**
**D-8000 München 22(DE)**

(72) Erfinder: **Klein, Lutz**
**Marderweg 5**
**D-8900 Augsburg(DE)**
Erfinder: **Panofski, Ernst**
**Hochfeldstrasse 3**
**D-8900 Augsburg(DE)**

(54) **Verfahren zur Herstellung eines Entladungsgefässes für kompakte Niederdruckentladungslampen.**

(57) Bei einem Verfahren zur Herstellung eines ein- oder mehrfach gebogenen rohrförmigen Entladungsgefäßes (27) aus Glas mit mehreren geraden Rohrabschnitten und 180°-Biegungen werden vor den Erwärmungs- und anschließenden Biegevorgängen gerade Glasrohrteile (1,2,3) aneinandergereiht, wobei die Teile (2), in deren Bereich eine 180°-Biegung vorgesehen ist, eine größere Wanddicke als die übrigen Teile aufweisen. Die gegenüberliegenden Enden benachbarter Glasrohrteile werden über den gesamten Umfang bis zur Verschmelzungstemperatur erwärmt und miteinander zu einem geraden Glasrohr verschmolzen. Durch die Schaffung eines geraden Glasrohres mit größeren Wanddicken in den Bereichen, in denen eine Biegung erstellt werden soll, wird es möglich, ein Entladungsgefäß zu erstellen, das keine bruchgefährdeten Abschnitte aufgrund zu geringer Wanddicken aufweist.

FIG.1

## Verfahren zur Herstellung eines Entladungsgefäßes für kompakte Niederdruckentladungslampen

Die Erfindung betrifft ein Verfahren zur Herstellung eines ein- oder mehrfach gebogenen rohrförmigen Entladungsgefäßes für eine kompakte Niederdruckentladungslampe entsprechend dem Oberbegriff des Anspruchs 1.

Aus der DE-OS 30 05 052 ist ein Verfahren zur Herstellung eines mehrfach gebogenen rohrförmigen Entladungsgefäßes für elektrische Entladungslampen bekannt. Zur Herstellung der Biegungen wird dazu ein im wesentlichen gerades Glasrohr an den entsprechenden Stellen bis zum Erweichen erhitzt und durch entsprechendes Schwenken der nicht erhitzten Teile das Rohr an den erhitzten Stellen um einen Formkörper herumgebogen.

Auch in der EP-PS 61 758 wird ein Verfahren zur Herstellung eines ein- oder mehrfach gebogenen rohrförmigen Entladungsgefäßes für eine Quecksilberdampf-Niederdruckentladungslampe beschrieben. Die zu biegenden Rohrteile eines geraden Glasrohres werden auf Erweichungstemperatur gebracht und durch Gegeneinanderbiegen der benachbarten Rohrteile eine 180°-Biegung erstellt. Anschließend wird die 180°-Biegung in einen Formkörper gegeben und durch Einblasen von Druckluft in die Rohrenden eine dem Formkörper entsprechende U-förmige Biegung mit im wesentlichen rechtwinkligen Ecken hergestellt. Die rechtwinkligen Ecken dienen dabei als Kühlstelle für den optimalen Betrieb der Lampe.

Als nachteilig erweist sich bei der Herstellung der 180°-Biegungen, daß die Wanddicke des Glasrohres an der äußeren Mantelfläche der Biegung durch den Biegevorgang abnimmt. Bei der Erstellung von 180°-Biegungen mit im wesentlichen rechtwinkligen Ecken wird diese Abnahme noch weiter verstärkt. Aufgrund der dünnen Wand sind daher die Entladungsgefäße an diesen Stellen besonders bruchgefährdet.

Die Bruchgefährdung kann verhindert werden, indem bei der Herstellung des Entladungsgefäßes ein Glasrohr mit einem entsprechend großen Wanddurchmesser verwendet wird, so daß nach Erstellung der 180°-Biegungen die Glaswand an der äußeren Mantelfläche eine gewisse Mindestwanddicke nicht unterschreitet. Dadurch wird jedoch eine erhebliche Gewichtszunahme des Gefäßes und damit der Lampe sowie eine Kostensteigerung in Kauf genommen.

Aufgabe der Erfindung ist es, ein Verfahren zur Herstellung eines ein- oder mehrfach gebogenen Entladungsgefäßes aus Glas zu finden, wobei die Wanddicke in den Bereichen der Biegungen, in denen der Biegeradius am größten ist, ein gewisse Mindestwanddicke nicht unterschreitet. Gleichzeitig soll jedoch die Wanddicke des Entladungsgefäßes in den geraden Rohrabschnitten das erforderliche Maß nicht überschreiten, so daß mit dem Verfahren keine wesentliche Gewichtszunahme beim Entladungsgefäß verbunden ist.

Die Aufgabe wird bei dem erfindungsgemäßen Verfahren durch Verfahrensschritte entsprechend den kennzeichnenden Merkmalen des Anspruchs 1 gelöst. Weitere vorteilhafte Verfahrensschritte sind den Unteransprüchen zu entnehmen.

Durch die Schaffung eines geraden Glasrohres mit größeren Wanddicken in den Bereichen, in denen eine Biegung erstellt werden soll, wird es möglich, ein Entladungsgefäß zu erstellen, das keine bruchgefährdeten Abschnitte aufgrund zu geringer Wanddicken aufweist. Der Übergang zwischen den Bereichen mit unterschiedlichen Wandstärken am geraden Glasrohr wird dann besonders gleichmäßig, wenn die einzelnen Rohrteile bei der Erwärmung ihrer Enden um die Längsachse gedreht werden.

Zur Herstellung von rechtwinkligen Ecken an der 180° Biegung kann die Biegung in einem speziellen Verfahrensschritt in eine entsprechende Form gegeben und die Ecken durch Einblasen von Druckluft in die Rohrenden erzeugt werden. Diese rechtwinkligen Ecken dienen beim fertigen Entladungsgefäß als Kühlstellen, durch die der Dampfdruck im Gefäß und damit die Lichtausbeute geregelt wird.

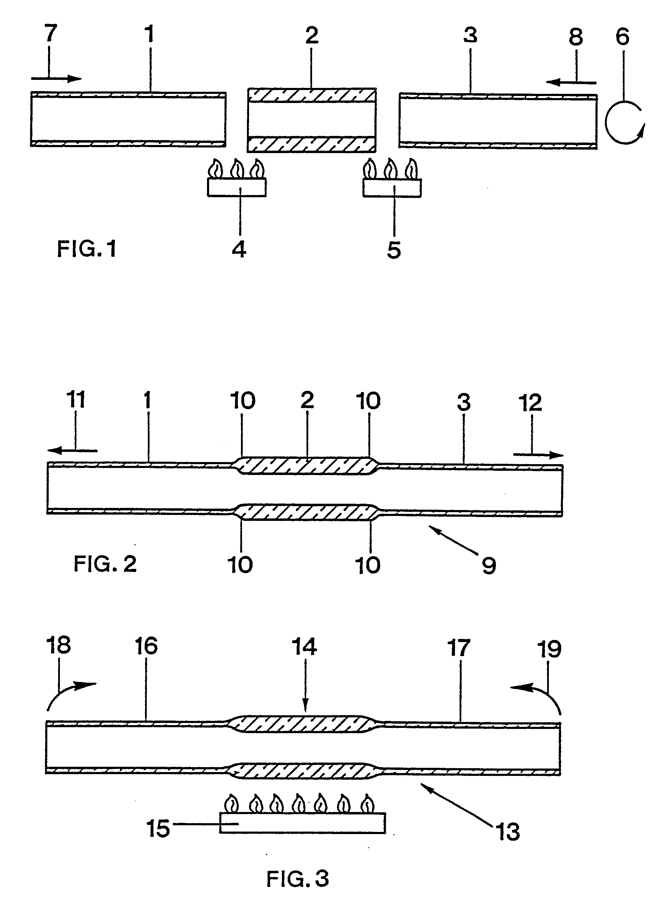

Das Verfahren ist anhand des nachfolgenden Verfahrensablaufes in den Figuren 1 bis 5 näher veranschaulicht.

Die Figuren 1 bis 5 zeigen die einzelnen Verfahrensschritte zur Herstellung eines einfach gebogenen rohrförmigen Entladungsgefäßes mit im wesentlichen rechtwinkligen Ecken. Zur Herstellung werden zuerst, wie in Figur 1 dargestellt, drei gerade Glasrohrteile 1, 2, 3 mit kreisförmigem Querschnitt aneinandergereiht. Die beiden äußeren Teile 1 und 3 besitzen dabei eine für gerade Abschnitte von Entladungsgefäßen ausreichende Wanddicke, während das mittlere Glasrohrteil 2 eine größere Wanddicke aufweist, da im Bereich dieses Teils 2 das fertige Entladungssgefäß eine 180°-Biegung aufweisen soll. Mit Hilfe von zwei Gasbrennern 4, 5 werden die sich gegenüberliegenden Enden der drei Glasrohrteile 1, 2, 3 bis zur Erweichungstemperatur erwärmt, wobei zur Erzielung einer möglichst gleichmäßigen Erwärmung über den gesamten Umfang die drei Glasrohrteile 1, 2, 3 zusätzlich um ihre Längsachse gedreht werden - veranschaulicht durch den gebogenen Pfeil 6. Anschließend werden entsprechend den Pfeilen 7 und 8 die beiden Glasrohrteile 1 und 3 gegeneinanderbewegt und mit dem Glasrohrteil 2 verschmolzen.

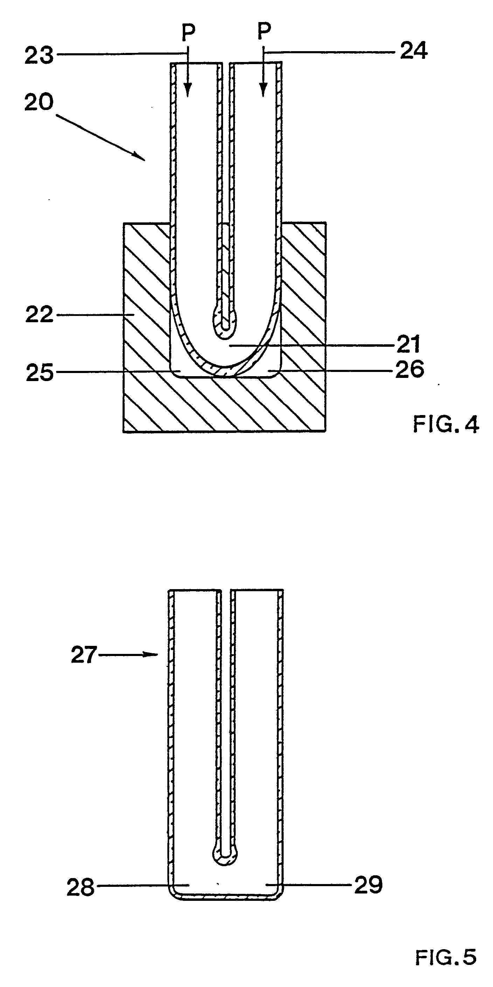

Figur 2 zeigt das aus den drei Glasrohrteilen 1, 2, 3 zusammengesetzte Glasrohr 9. Die beiden Glasrohrteile 1 und 3 werden nun wieder etwas voneinander wegbewegt - veranschaulicht durch die Pfeile 11 und 12 -um die an den Verbindungsstellen der drei Glasrohrteile 1, 2, 3 gebildeten Glaswülste 10 zu beseitigen. Dadurch wird ein Glasrohr 13 mit einem gleichmäßigen Übergang geschaffen, wie in Figur 3 gezeigt. Der Bereich 14 des Glasrohres 13, der eine verstärkte Wanddicke aufweist, wird nun mittels eines Gasbrenners 15 über seine gesamte Länge gleichmäßig erwärmt. Durch Gegeneinanderbiegen der seitlich von dem erwärmten Bereich 14 befindlichen geraden Rohrabschnitte 16, 17 nach oben - entsprechend den Pfeilen 18, 19 - wird eine 180°-Biegung am Glasrohr 13 erzeugt. Anschließend wird, wie in Figur 4 dargestellt, das gebogene Glasrohr 20 mit der 180°-Biegung 21 in einen Formkörper 22 aus Metall gebracht. Mittels Preßluft, die - veranschaulicht durch die mit P bezeichneten Pfeile 23 und 24 - in die beiden Enden des gebogenen Glasrohres 20 befördert wird, wird das Glasrohr so in die rechtwinkligen Ecken 25, 26 des Formkörpers 22 geblasen. In Figur 5 ist das fertig geformte Entladungsgefäß 27 mit einer 180°-Biegung und zwei im wesentlichen rechtwinkligen Ecken 28, 29 dargestellt.

## Ansprüche

1. Verfahren zur Herstellung eines ein- oder mehrfach gebogenen rohrförmigen Entladungsgefäßes für eine kompakte Niederdruckentladungslampe mit mehreren geraden Rohrabschnitten und 180°-Biegungen (21), wobei zur Erstellung einer 180°-Biegung (21)
- der für die Ausführung der 180°-Biegung benötigte Abschnitt (14) eines geraden Glasrohres (13) bis zum Erweichen erwärmt wird
- und anschließend die seitlich von dem erwärmten Abschnitt (14) sich erstreckenden geraden Rohrabschnitte (16, 17) gegeneinander gebogen werden, bis diese parallel zueinander ausgerichtet sind, dadurch gekennzeichnet, daß vor den Erwärmungs- und anschließenden Biegevorgängen
- gerade Glasrohrteile (1, 2, 3) aneinandergereiht werden, wobei die Teile (2), in deren Bereich eine 180°-Biegung vorgesehen ist, eine größere Wanddicke als die übrigen Teile (1, 3) aufweisen
- die gegenüberliegenden Enden benachbarter Glasrohrteile (1, 2, 3) über den gesamten Umfang bis zur Verschmelzungstemperatur erwärmt werden
- die erwärmten Enden der Glasrohrteile (1, 2, 3) zusammengeführt und so verschmolzen werden, daß die jeweilige Ansatzstelle einen fließenden Übergang erhält und ein gerades Glasrohr (13) entsteht.

2. Verfahren nach Anspruch 1, dadurch gekennzeichnet, daß die Glasrohrteile (1, 2, 3) beim Erwärmen der Enden um ihre Längsachse rotiert werden.

3. Verfahren nach Anspruch 1 und/oder 2, dadurch gekennzeichnet, daß die jeweilige 180°-Biegung (21) des Glasrohres (20) nach dem Biegevorgang in eine entsprechende Form (22) gegeben wird und durch Einblasen von Druckluft in die Rohrenden rechtwinklige Ecken (28, 29) an der Biegung erzeugt werden.

FIG.1

FIG. 2

FIG.3

FIG. 4

FIG. 5

## EINSCHLÄGIGE DOKUMENTE

EP 88113352.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | <u>DE - B - 1 072 782</u> (LICENTIA) <br> * Fig. 1-4; Spalte 3, Zeilen 23-30; Ansprüche * <br> -- | 1 | C 03 B 23/207 <br> C 03 B 23/06 <br> H 01 J 61/30 <br> H 01 J 9/24 |
| Y | <u>DD - A - 210 370</u> (KOMBINAT VEB NARVA) <br> * Gesamt * <br> -- | 1 | |
| A | <u>GB - B - 959 666</u> (HEATH) <br> * Fig. 4,5; Seite 1, Zeilen 40-41; Ansprüche * <br> -- | 1,2 | |
| A | <u>EP - A1 - 0 151 647</u> (MITSUBISHI, DENKI, KABUSHIKI, KAISHA) <br> * Fig. 40; Seite 28, Zeilen 1-12 * <br> ---- | 3 | |

RECHERCHIERTE SACHGEBIETE (Int. Cl.4)

C 03 B 23/00

H 01 J 9/00

H 01 J 61/00

Der vorliegende Recherchenbericht wurde für alle Patentansprüche erstellt.

| Recherchenort | Abschlußdatum der Recherche | Prüfer |
|---|---|---|
| WIEN | 22-11-1988 | BRUNNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82